# EUROPEAN PATENT SPECIFICATION

(11) **EP 4 292 240 B1**
(45) Date of publication and mention of the grant of the patent: **05.03.2025**
(21) Application number: 21712778.6
(22) Date of filing: 15.03.2021
(51) Int. Cl.: H04L 9/00, H04L 9/32, H04L 9/08

(54) **RANDOMNESS IN DISTRIBUTED NETWORKS**
ZUFÄLLIGKEIT IN VERTEILTEN NETZWERKEN
CARACTÈRE ALÉATOIRE DANS DES RÉSEAUX DISTRIBUÉS

(43) Date of publication of application: 20.12.2023
(73) Proprietor: Dfinity Stiftung, 8002 Zürich (CH)
(72) Inventor: CAMENISCH, Jan, 8002 Zürich (CH); DRIJVERS, Manu, 8002 Zürich (CH); WILLIAMS, Dominic, 8002 Zürich (CH)
(74) Representative: E. Blum & Co. AG
(86) International application number: PCT/EP2021/056538
(87) International publication number: WO 2022/194343

(56) References cited:
- TIMO HANKE ET AL: "DFINITY Technology Overview Series, Consensus System", ARXIV.ORG, CORNELL UNIVERSITY LIBRARY, 201 OLIN LIBRARY CORNELL UNIVERSITY ITHACA, NY 14853, 11 May 2018 (2018-05-11), XP080877367
- ABUBAKAR MWRWAN M ABUBAKAR@NAPIER AC UK ET AL: "PoNW A Secure and Scalable Proof-of-Notarized-Work Based Consensus Mechanism", PROCEEDINGS OF THE 2021 INTERNATIONAL CONFERENCE ON BIOINFORMATICS AND INTELLIGENT COMPUTING, ACMPUB27, NEW YORK, NY, USA, 9 December 2020 (2020-12-09), pages 1 - 8, XP058588472, ISBN: 978-1-4503-8859-7, DOI: 10.1145/3448823.3448875

## Description

### Technical Field

The present invention pertains to a distributed network comprising a replicated computing cluster. The replicated computing cluster comprises a plurality of nodes. Each of the plurality of nodes of the replicated computing cluster is configured to run a replica.

Further aspects relate to a computer-implemented method, a node of a distributed network and a corresponding computer program product.

### Background Art

In distributed networks a plurality of nodes are arranged in a distributed fashion. In distributed networks computing, software and data are spread out across the plurality of nodes. The nodes establish computing resources and the distributed networks may use distributed computing techniques.

An example of distributed networks are blockchain networks. Blockchain networks are consensus-based, electronic ledgers based on blocks. Each block comprises transactions and other information. Furthermore, each block contains a hash of the previous block so that blocks become chained together to create a permanent, unalterable record of all transactions which have been written to the blockchain. Transactions may call small programs known e.g. as smart contracts.

In order for a transaction to be written to the blockchain, it must be "validated" and agreed upon by the network. In other words, the network nodes have to reach consensus on blocks to be written to the blockchain. Such a consensus may be achieved by various consensus protocols.

In one type of blockchain networks, consensus is achieved by using a proof-of-work algorithm.

Another type of consensus protocols is based on a proof-of-stake algorithm. Such proof-of-stake protocols have the advantage that they do not require time-consuming and energy-intensive computing. In proof-of-stake based blockchain networks e.g. the creator of the next block is chosen via combinations of random selection as well as the stake of the respective node in the network.

Apart from cryptocurrencies, distributed networks may be used for various other applications.

In particular, they may be used for providing decentralized and distributed computing capabilities and services.

The document "DFINITY Technology Overview Series, Consensus System by Timo Hanke ET AL, arXiv.org, 20180511 Cornell University Library, 201 Olin Library Cornell University Ithaca, NY 14853 provides an overview of a secure, performant and flexible consensus mechanism of the Dfinity blockchain computer.

The document by Abubakar Mwrwan ET AL " PoNW A Secure and Scalable Proof-of-Notarized-Work Based Consensus Mechanism" PoNW A Secure and Scalable Proof-of-Notarized-Work Based Consensus Mechanism discloses a secure and scalable Proof-of-Notarized-Work Based Consensus Mechanism.

One challenge of such distributed networks which provide distributed computing services is to provide randomness to the nodes of a replicated computing cluster in a secure and efficient way.

### Disclosure of the Invention

Accordingly, one object of an aspect of the invention is to provide a distributed network having an advantageous mechanism for providing randomness to the nodes of a replicated computing cluster.

According to an embodiment of a first aspect of the invention there is provided a distributed network which comprises a replicated computing cluster. The replicated computing cluster comprises a plurality of nodes, wherein each of the plurality of nodes of the replicated computing cluster is configured to run a replica and each of the replicas is configured to run one or more computational units. The replicated computing cluster is configured to perform consecutive consensus rounds to reach a consensus on a sequence of payloads and to perform consecutive processing rounds comprising a consecutive processing of the sequence of payloads in a deterministic and replicated manner. The distributed network is characterized in that the replicated computing cluster is configured to perform consecutive computations of a random seed for each of the payloads of the sequence of payloads and to use the random seed of a respective payload of the sequence of payloads to provide randomness to the payload. The respective computation of the random seed for a respective payload is performed only after a consensus on the respective payload has been reached.

Such an embodied method allows the provision of randomness to the replicas of a replicated computing cluster in a secure way, in particular in a way that cannot be biased by adversaries. This allows the replicas and in particular the computational units which run on the replicas to perform computations based on the randomness in a replicated setting in a secure manner.

According to the embodied method, each of the replicas performs processing rounds and processes during each of the processing rounds a payload that has been allocated/assigned to the respective processing round. The payload of a processing round may comprise a plurality of payload instances or in other words transactions. The payload instances may be embodied in particular as messages that shall be processed by the replicated computing cluster.

The replicated computing cluster computes for each of the payloads of the consecutive processing rounds a random seed. Hence each payload and each of the processing rounds has a corresponding random seed which can be used to provide randomness to the payload. The randomness may be used e.g. to respond to randomness requests of the payload.

The computation of the random seed for a respective payload is performed only after the consensus on the respective payload has been reached. As soon as the consensus on a respective payload has been reached, it is ensured that the payload cannot be changed anymore by an adversary and that the randomness computed afterwards is independent from the payload.

According to embodiments, the distributed network is configured to perform the computation of the random seed by performing a threshold-signature protocol on a predefined input value of a respective processing round. This creates a threshold-signature on the predefined input value. The threshold-signature is then used as random seed for a corresponding payload.

Such a threshold-signature is an efficient and secure solution for providing randomness for a replicated computing cluster. This is based in particular on the property of the threshold signature that its value is unpredictable until a threshold number of signature shares have been executed on the predefined input value by the replicas of the replicated computing cluster.

According to embodiments, the consecutive processing rounds are numbered with a consecutive processing round number and the predefined input value of a respective processing round is the processing round number. The processing round number may be generally any kind of number, in particular an integer.

This is an efficient and reliable scheme to pre-agree on or predefine in advance the input value of the threshold signature.

According to another embodiment, the predefined input value of the threshold-signature protocol is the threshold-signature being created in the previous processing round.

According to such an embodiment the random seeds are chained together and form a chain of input values.

According to embodiments, the threshold-signature protocol is the Boneh-Lynn-Shacham (BLS)-signature protocol.

According to embodiments, the distributed network is configured to perform a distributed key generation protocol for or by the plurality of nodes of the replicated computing cluster. The distributed key generation protocol generates a verification key of a public-key threshold signature scheme and a set of corresponding secret key shares for the nodes of the replicated computing cluster. As a result each of the nodes of the replicated computing cluster has an individual secret key share which can be used to participate in the threshold-signature protocol and execute a signature share on the predefined input value.

According to another embodiment, the distributed network may be configured to perform the computation of the random seed by performing a coin-flipping protocol.

According to an embodiment, the distributed network is configured to perform a consecutive processing of input blocks of a blockchain. Each of the input blocks comprises a payload of the sequence of payloads.

According to such an embodiment the blocks and hence also the payloads are chained together. This makes the payloads resistant to modification. More particularly, the blocks and its payloads cannot be altered retroactively without alteration of all subsequent blocks.

According to embodiments each of the replicas is configured to process during each of the consecutive processing rounds a batch comprising the payload of the respective processing round and a random seed. Such a batchwise processing facilitates an efficient and fast data processing. According to such an embodiment each batch comprises a pair of a payload and a random seed. These pairs are then used during the corresponding processing round for the processing of the payload and for responses to payload requests.

According to an embodiment, the distributed network comprises a consensus layer and a messaging layer. The consensus layer is configured to perform a consensus protocol for reaching consensus on the respective payloads of the sequence of payloads to be processed by the replicated computing cluster, to perform the computation of the random seeds and to provide the payloads and the random seeds to the messaging layer.

The messaging layer serves as upper layer and orchestrates a batchwise processing of the batches.

The consensus layer may be configured to deliver the batch of a respective processing round to the messaging layer once a consensus on the corresponding payload has been reached and once the corresponding random seed has been computed.

According to embodiments, the processing rounds comprise consecutive processing round numbers X and the distributed network is configured to start to compute a random seed RSₓ₊₁ for the batch of a subsequent processing round X+1 after a consensus on the payload for a given processing round X has been reached. The distributed network may be further configured to collect during the processing of the given processing round X randomness requests of payload instances and to provide responses to the randomness requests of the payload instances of the given processing round X in the subsequent processing round X+1 based on the random seed RSₓ₊₁.

According to such an embodiment the payload instances of a given payload which require randomness are not served in the given processing round, but they have to wait for the next processing round for a response to their randomness requests. In other words, randomness requests are handled in an asynchronous manner. The processing round number may be generally any kind of number, in particular an integer. In a given processing round X, the replicated computing cluster collects all randomness requests and in the subsequent processing round X+1 responses to the randomness requests of processing round X are provided which derive their randomness from the random seed of processing round X+1. Since the random seed of processing round X+1 was created after a consensus on the payload X has been reached, the random seed X+1 is not bias-able by the payload X.

Such an embodiment keeps the latency of the replicated computing cluster minimal. As usually the computation of the random seed takes less time than the reaching of a consensus on the next payload, a batch X can usually be immediately delivered from the consensus layer to the messaging layer as soon as a consensus on the respective payload has been reached.

According to embodiments, the distributed network may be configured to add the responses to the randomness requests to an induction pool of the messaging layer.

According to another embodiment, the processing rounds comprise consecutive processing round numbers X and the distributed network is configured to start to compute a random seed RS_{X} for the batch of a processing round X after a consensus on the payload for the processing round X has been reached. After computing the random seed it is added to the batch of the processing round X. The distributed network, more particularly the replicas of the replicated computing cluster, provide a response to randomness requests of the payload instances of the processing round X based on the random seed RS_{X}.

According to such an embodiment the payload instances of a given payload which require randomness are served in the same given processing round. In other words, randomness requests are handled in a synchronous manner. This comes at the cost of some latency, as the random seed can only be computed after a consensus on the payload of the respective processing round has been reached.

According to embodiments, the distributed network is configured to derive during a respective processing round a plurality of random values from the random seed of the respective processing round. In this respect, the random seed provides an initial randomness which serves as the basis for deriving further randomness. Accordingly, each of the randomness request of a given payload may receive a different randomness.

According to embodiments, the distributed network is configured to run a pseudorandom number generator. The pseudorandom number generator is configured to use the random seed of a respective processing round as input seed value.

According to an embodiment of another aspect a computer-implemented method for operating a distributed network is provided.

According to an embodiment of another aspect of the invention, a node of a distributed network is provided. The node is configured to participate in the consensus rounds, to perform the consecutive processing rounds, to participate in the consecutive computations of a random seed and to use the random seed of a respective payload. Participating in the consensus rounds may include being an active party of the corresponding consensus protocol. Participating in the computations of a random seed may include e.g. being an active party of the threshold-signature protocol.

According to an embodiment of another aspect of the invention, a computer program product for operating a distributed network is provided. The computer program product comprises a computer readable storage medium having program instructions embodied therewith, the program instructions executable by one or more of a plurality of nodes of the distributed network to cause the one or more of the plurality of nodes to perform steps of the method aspect of the invention.

Features and advantages of one aspect of the invention may be applied to the other aspects of the invention as appropriate.

Other advantageous embodiments are listed in the dependent claims as well as in the description below.

### Brief Description of the Drawings

The invention will be better understood and objects other than those set forth above will become apparent from the following detailed description thereof. Such description makes reference to the annexed drawings, wherein:
FIG. 1 shows an exemplary diagram of a distributed network according to an embodiment of the invention;
FIG. 2 illustrates in a more detailed way computational units running on exemplary nodes of the network;
FIG. 3 illustrates the creation of blocks in distributed networks according to embodiments of the invention;
FIG. 4 illustrates a batchwise processing of batches according to an embodiment of the invention;
FIG. 5 shows a layer model illustrating main layers of a distributed network;
FIG. 6 shows a schematic block diagram of protocol components of a client of a replicated computing cluster/subnet;
FIG. 7 illustrates a communication mechanism between the consensus layer and the messaging layer of FIG. 6;
FIG. 8 shows an exemplary timing diagram of the consensus mechanism and the computation of the random seed according to an embodiment of the invention;
FIG. 9 shows another exemplary timing diagram of the consensus mechanism and the computation of the random seed according to another embodiment of the invention;
FIG. 10 shows a flow chart of methods steps of a computer-implemented method for processing a sequence of payloads by a plurality of replicas in a replicated manner;
FIG. 11 shows an embodiment of keys which may be generated by a distributed threshold key generation protocol;
Fig. 12 shows a flow chart of methods steps of a computer-implemented method for processing a sequence of payloads by a plurality of replicas in a replicated manner; and
FIG. 13 shows an exemplary embodiment of a node according to an embodiment of the invention.

### Modes for Carrying Out the Invention

At first, some general aspects and terms of embodiments of the invention will be introduced.

According to embodiments, a distributed network comprises a plurality of nodes that are arranged in a distributed fashion. In such a distributed network computing, software and data is distributed across the plurality of nodes. The nodes establish computing resources and the distributed network may use in particular distributed computing techniques.

According to embodiments, distributed networks may be embodied as blockchain networks. The term "blockchain" shall include all forms of electronic, computer- based, distributed ledgers. According to some embodiments, the blockchain network may be embodied as proof-of-work blockchain network. According to other embodiments, the blockchain network may be embodied as proof-of-stake blockchain network.

A computational unit may be defined as a piece of software that is running on the network and which has its own unit/round state. According to embodiments, a computational unit may be defined as a deterministic program.

A verification key: a bit-string of a public key signature scheme intended to be widely publicized. A verification key may also be denoted as public key and may be used e.g. for the verification of digital signatures of the public key signature scheme.

A public-key signature scheme according to embodiments of the invention may comprise e.g. keys of a public-key signature and encryption scheme such as RSA or keys of a public-key signature scheme such as Schnorr or DSA.

Secret key (sk): a bit-string related to a public key, in particular a verification key, enabling some cryptographic operation, in particular digitally signing a message.

Distributed key generation (DKG): a protocol enabling a set of dealers to create a public key, in particular a verification key, and provide a set of receivers with a secret key share of the corresponding secret key.

(n,t)-threshold key/threshold secret key: Such a threshold key has a threshold t and a number of secret key shares s1,...,sn such that any t secret key shares enable reconstruction of the secret key, while t-1 shares do not suffice to determine the secret key.

A threshold-signature protocol is a protocol for executing a threshold signature, wherein any t secret key shares enable the execution of a valid threshold-signature under the threshold public key/verification key, while t-1 shares do not suffice to execute a valid signature.

According to embodiments, the Feldman protocol [Fel87], joint Feldman protocol [Ped91] and the GJKR protocol [GJKR99] may be used as distributed key generation protocols. These protocols are e.g. published as follows:
[Fel87] Paul Feldman. A practical scheme for non-interactive verifiable secret sharing.

In 28th Annual Symposium on Foundations of Computer Science, pages 427-437, Los Angeles, California, October 12-14, 1987. IEEE Computer Society Press.

[Ped91] Torben P. Pedersen. A threshold cryptosystem without a trusted party (extended abstract) (rump session). In Donald W. Davies, editor, Advances in Cryptology - EUROCRYPT'91, volume 547 of Lecture Notes in Computer Science, pages 522-526, Brighton, UK, April 8-11, 1991. Springer, Heidelberg, Germany.

[GJKR99] Rosario Gennaro, Stanislaw Jarecki, Hugo Krawczyk, and Tal Rabin. Secure distributed key generation for discrete-log based cryptosystems. In Jacques Stern, editor, Advances in Cryptology - EUROCRYPT'99, volume 1592 of Lecture Notes in Computer Science, pages 295-310, Prague, Czech Republic, May 2-6, 1999. Springer, Heidelberg, Germany.

According to embodiments, the signature protocol as described e.g. in the document Boneh, D., Lynn, B. & Shacham, H. J Cryptology (2004) 17: 297, https://doi.org/10.1007/s00145-004-0314-9, may be used as threshold-signature protocol.

A coin flipping protocol may be defined as a protocol which allows mutually distrustful parties to generate a common unbiased random value, guaranteeing that even if a predefined threshold number of the parties is malicious, they cannot bias the random value.

Such a coin-flipping protocol may be embodied e.g. as the protocol as described in:
Blum, M. (1982). Coin Flipping by Telephone: A Protocol for Solving Impossible Problems. 24th IEEE Computer Society International Conference. 133-137;
   or in
Haitner I., Makriyannis N., Omri E. (2018) On the Complexity of Fair Coin Flipping. In: Beimel A., Dziembowski S. (eds) Theory of Cryptography. TCC 2018. Lecture Notes in Computer Science, vol 11239. Springer, Cham.

A pseudorandom number generator (PRNG) is module for generating a sequence of numbers whose properties approximate the properties of sequences of random numbers. As the generated sequence of numbers is determined by an initial seed value, the sequence is not truly random, but pseudorandom.

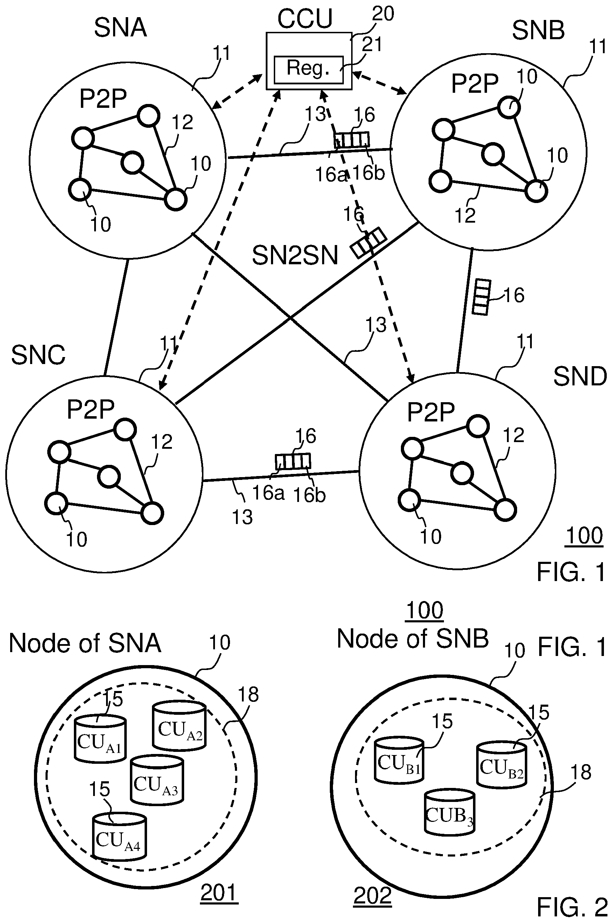

FIG. 1 shows an exemplary block diagram of a distributed network 100 according to an embodiment of the invention.

The distributed network 100 comprises a plurality of nodes 10, which may also be denoted as network nodes 10. The plurality of nodes 10 are assigned to a plurality of replicated computing clusters 11. The replicated computing clusters 11 establish subnetworks and may be in the following also denoted as subnetworks 11. In the example of FIG. 1, four subnetworks 11 denoted with SNA, SNB, SNC and SND are provided.

Each of the plurality of subnetworks 11 is configured to run a set of computational units on each node 10 of the respective subnetwork 11. According to embodiments, a computational unit shall be understood as a piece of software, in particular as a piece of software that comprises or has its own unit state.

The network 100 comprises communication links 12 for intra-subnetwork communication within the respective subnetwork 11, in particular for intra-subnetwork unit-to-unit messages to be exchanged between computational units assigned to the same subnetwork.

Furthermore, the network 100 comprises communication links 13 for inter-subnetwork communication between different ones of the subnetworks 11, in particular for inter-subnetwork unit-to-unit messages to be exchanged between computational units assigned to different subnetworks.

Accordingly, the communication links 12 may also be denoted as intra-subnetwork or Peer-to-Peer (P2P) communication links and the communication links 13 may also be denoted as inter-subnetwork or Subnetwork-to-Subnetwork (SN2SN) communications links.

According to embodiments, a unit state shall be understood as all the data or information that is used by the computational unit, in particular the data that the computational unit stores in variables, but also data the computational units get from remote calls. The computational units may be in particular embodied as stateful computational units, i.e**.** the computational units are designed according to embodiments to remember preceding events or user interactions.

According to embodiments of the invention the subnetworks 11 are configured to replicate the set of computational units across the respective subnetwork 11. More particularly, the subnetworks 11 are configured to replicate the unit state of the computational units across the respective subnetwork 11.

The network 100 may be in particular a proof-of-stake blockchain network.

The distributed network 100 comprises a central control unit CCU, 20. The central control unit 20 may comprise a central registry 21 to provide network control information to the nodes of the network.

FIG. 2 illustrates in a more detailed way computational units 15 running on nodes 10 of the network 100. The network 100 is configured to assign each of the computational units which are running on the network 100 to one of the plurality of replicated computing clusters/subnetworks, in this example to one of the subnetworks SNA, SNB, SNC or SND according to a subnetwork-assignment. The subnetwork-assignment of the distributed network 100 creates an assigned subset of the whole set of computational units for each of the subnetworks SNA, SNB, SNC and SND.

More particularly, FIG. 2 shows on the left side 201 a node 10 of the subnetwork SNA of FIG. 1. The subnetwork assignment of the distributed network 100 has assigned a subset of four computational units 15 to the subnetwork SNA more particularly the subset of computational units CU_{A1}, CU_{A2}, CU_{A3} and CU_{A4}. The assigned subset of computational units CU_{A1}, CU_{A2}, CU_{A3} and CU_{A4} runs on each node 10 of the subnetwork SNA and establishes a replica 18. Furthermore, the assigned subset of computational units CU_{A1}, CU_{A2}, CU_{A3} and CU_{A4} is replicated across the whole subnetwork SNA such that each of the computational units CU_{A1}, CU_{A2}, CU_{A3} and CU_{A4} traverses the same chain of unit states. This may be implemented in particular by performing an active replication in space of the unit state of the computational units CU_{A1}, CU_{A2}, CU_{A3} and CU_{A4} on each of the nodes 10 of the subnetwork SNA.

Furthermore, FIG. 2 shows on the right side 202 a node 10 of the subnetwork SNB of FIG. 1. The subnetwork assignment of the distributed network 100 has assigned a subset of 3 computational units 15 to the subnetwork SNB, more particularly the assigned subset of computational units CU_{B1}, CU_{B2} and CU_{B3}. The assigned subset of computational units CU_{B1}, CU_{B2} and CU_{B3} runs on each node 10 of the subnetwork SNB, is replicated across the whole subnetwork SNB and establishes replicas 18.

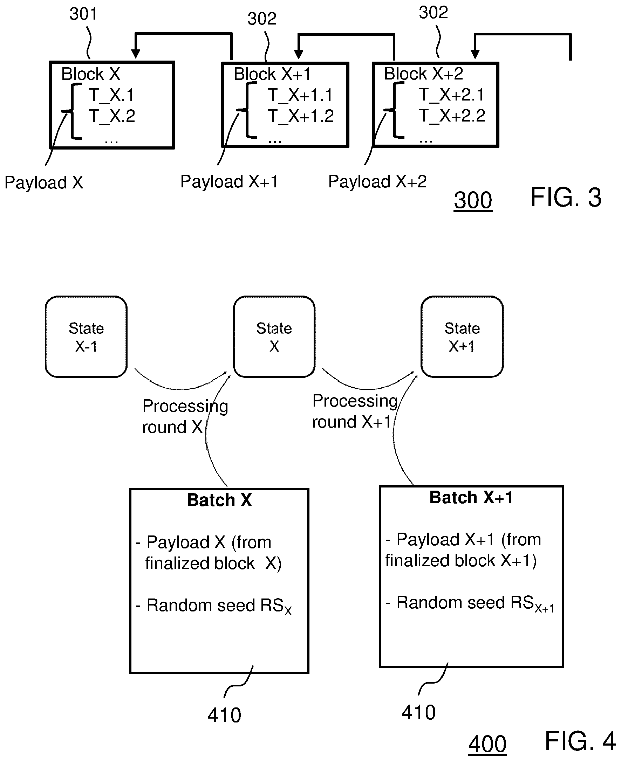

FIG. 3 illustrates the creation of blocks in distributed networks according to embodiments of the invention. The blocks may be in particular input blocks which are to be processed by the computational units of the replicas of a replicated computing cluster. The input blocks which are to be processed by the replicated computing cluster have been agreed upon by a consensus subset of the respective nodes/replicas of the replicated computing cluster.

In this exemplary embodiment three input blocks 301, 302 and 303 are illustrated. Block 301 comprises a plurality of transactions of a payload X, namely the transactions T_X.1, T_X.2, and possibly further transactions indicated with dots. Block 302 comprises also a plurality of transactions of a payload X+1, namely the transactions T_X+1.1, T_X+1.2,and possibly further transactions indicated with dots. Block 303 also comprises a plurality of transactions of a payload X+1, namely the transactions T_X+2.1, T X.2+2,and possibly further transactions indicated with dots. According to embodiments, the input blocks 301, 302 and 303 may be chained together. More particularly, each of the blocks may comprise a block hash of the previous block. This cryptographically ties the current block to the previous block(s).

According to embodiments the transactions may be denoted as payload instances. According to embodiments the transaction may be messages which are to be executed by the nodes/replicas of the replicated computing cluster.

According to embodiments, the input blocks 301, 302 and 303 may be created by a proof-of-stake consensus-protocol.

However, it should be noted that the input blocks generated by the consensus component do not need to be chained together according to embodiments. Rather any consensus protocol that reaches some kind of consensus between the nodes on the transactions of the payload may be used according to embodiments.

FIG. 4 illustrates a batchwise processing of batches of two consecutive processing rounds X and X+1 according to an embodiment of the invention. More particularly, at the processing round X a batch 410 is processed. The batch 410 comprises a payload X and a random seed RS_{X} which establishes a randomness X. The processing round X takes a former state X-1 as input and provides as a result a state X. Likewise, in the next processing round X+1 a batch X+1 comprising a payload X+1 and a random seed RSₓ₊₁ establishing a randomness X+1 is processed.

By this batchwise or blockwise processing, the replicas traverse a chain of round states of state heights X-1, X, X+1,..

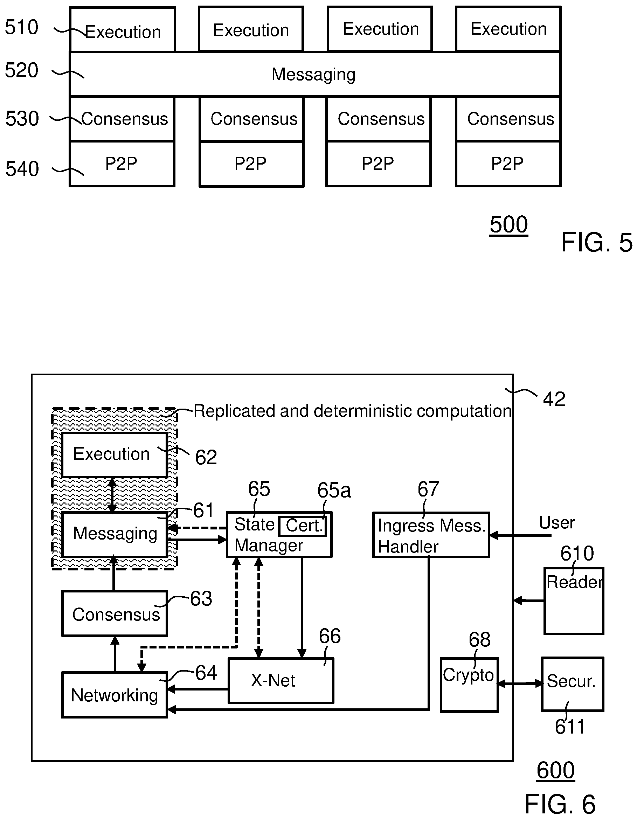

FIG. 5 shows a layer model 500 illustrating main layers of a distributed network according to embodiments. The layer model 500 comprises an execution layer 510 which is configured to provide an execution environment for the execution of payloads, in particular (execution) messages. The layer model 500 further comprises a messaging layer 520 which is configured to serve as an upper layer for communication of the network. More particularly, the messaging layer 520 is configured to route inter-subnet messages between computational units of different subnets. Furthermore, the messaging layer 520 is configured to route (ingress) messages from users of the network to computational units of the network.

The layer model 500 further comprises a plurality of consensus layers 530 which are configured to perform a consensus protocol for reaching consensus on the respective payloads of the sequence of payloads to be processed by a corresponding replicated computing cluster. The may include to receive inter-subnet messages from different subnets as well as ingress messages and to organize them, in particular by agreeing on a processing order, in a sequence of input blocks which are then further processed by the respective subnet/replicated computing cluster. The consensus layers 530 are further configured to compute the random seeds for the payloads of the respective processing rounds.

In addition, the layer model 500 comprises a peer-to-peer (P2P) layer 540 that is configured to organize and drive communication between the nodes of a single subnet/replicated computing cluster.

FIG. 6 shows a schematic block diagram of protocol components 600 of a client 42 of a replicated computing cluster/subnet.

Full arrows in FIG. 6 are related to unit-to-unit messages and ingress messages. Dashed arrows relate to system information.

The protocol components 600 comprise a messaging component 61 which is configured to run the messaging protocol and an execution component 62 configured to run an execution protocol for executing messages, in particular for executing unit-to-unit messages and/or ingress messages. The protocol components 600 further comprise a consensus component 63 configured to run a consensus protocol, a networking component 64 configured to run a networking protocol, a state manager component 65 configured to run a state manager protocol, an X-Net component 66 configured to run a cross-subnet transfer protocol and an ingress message handler component 67 configured to handle ingress message received from an external user of the network. The protocol components 600 comprise in addition a crypto-component 68. The crypto-component 68 co-operates with a security component 611. Furthermore, a reader component 610 may provide information of the network such as the assignment of nodes to subnets, node public keys, assignment of computational units to subnets etc.

The messaging component 61 and the execution component 62 are configured such that all computation, data and state in these components is identically replicated across all nodes of the respective subnet, more particularly all honest nodes of the respective subnet. This is indicated by the wave-pattern background of these components.

Such an identical replication is achieved according to embodiments on the one hand by virtue of the consensus component 63 that ensures that the stream of inputs to the messaging component 61 is agreed upon by the respective subnet and thus identical for all nodes, more particularly by all honest nodes. On the other hand, this is achieved by the fact that the messaging component 61 and the execution component 62 are configured to perform a deterministic and replicated computation.

The X-Net Transfer component 66 sends message streams to other subnets and receives message streams from other subnets.

The execution component 62 receives from the messaging component 61 a unit state of the computational unit and an incoming message for the computational unit, and returns an outgoing message and the updated unit state of the computational unit.

The state manager component 65 comprises a certification component 65a. The certification component 65a is configured to certify the output streams of the respective subnet.

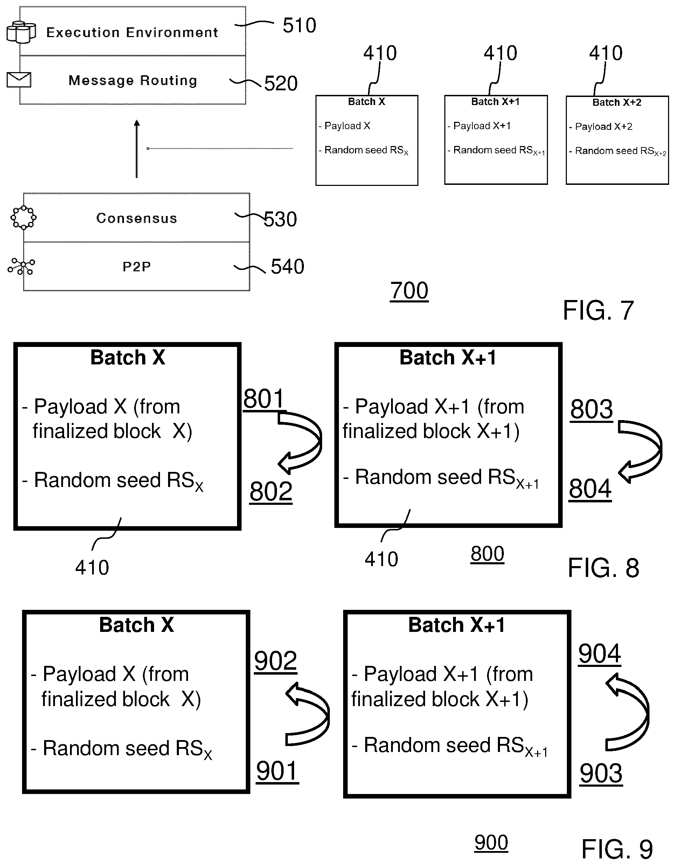

FIG. 7 illustrates a communication mechanism between the consensus layer 530 and the messaging layer 520 as described with reference to FIG. 5. According to the embodiment shown in FIG. 7, the consensus layer 530 provides batches 410 comprising the payloads from finalized input blocks and random seeds to the messaging layer 520. A finalized input block shall be understood as an input block on which the replicas have reached a (final) consensus. Upon receipt the messaging layer 520 orchestrates then the batchwise processing of the batches 410. The consensus layer 530 delivers according to embodiments the batches 410 of a respective processing round to the messaging layer 520 once a consensus on the corresponding payload has been reached and once the corresponding random seed has been computed. According to other embodiments the payload and the random seed of a respective processing round may also be delivered separately by the consensus layer 530 to the messaging layer 520 and then executed upon receipt of both as a batch during the corresponding processing round.

FIG. 8 shows an exemplary timing diagram of the consensus mechanism and the computation of the random seed according to an embodiment of the invention.

At first, at a step 801, the replicas of a replicated computing cluster agree by means of a consensus protocol on a payload X, e.g**.** by agreeing on an input block X or in other words by reaching a (final) consensus on the input block X. As mentioned, such an input block may be referred to as a finalized input block. Then, only after reaching a consensus on the payload X**,** the replicas compute, at a step 802, a random seed RS_{X}. Thereafter, a corresponding batch X comprising the payload X and the random seed RS_{X} may be provided by the consensus layer 530 to the messaging layer 520.

This timing scheme is repeated for the subsequent batches. Accordingly, at a step 803, it is at first agreed on the payload X+1 and only thereafter, at a step 804, it is started to compute the random seed RS_{X+1}.

According to such a scheme the random seed RS_{X} may be used for the payload X or in other words the random seed RS_{X} may be used during the corresponding processing of the payload X for randomness requests of the payload X. Hence the random seed of a batch may be used for the payload of the same batch in a synchronous manner. This has the advantage that the payloads of a respective batch can be served immediately with the randomness provided within the same batch. However, this advantage may come at the cost of some latency due to the sequential computing of the payload and the random seed.

FIG. 9 shows an exemplary timing diagram of the consensus mechanism and the computation of the random seed according to another embodiment of the invention.

According to such an embodiment the random seed RS_{X} for the batch X is computed in parallel to performing the consensus protocol for reaching consensus on the payload of batch X. More particularly, as soon as the replicated computing cluster has reached a consensus on the payload of the batch X, the replicated computing cluster starts to compute a random seed RS_{X+1} for the batch X+1 of a subsequent processing round X+1.

Accordingly, at a step 901, the replicas of a replicated computing cluster compute the random seed RS_{X} for batch X. In parallel, the replicas perform, at a step 902, a consensus protocol to agree on a payload X. The step 901 may be already started as soon as the replicas have reached consensus on the payload X-1 of the previous batch X-1 (not shown). As usually the computation of the random seed is shorter than the reaching of a consensus on a payload/input block, the randomness/random seed for the batch X is usually already available when the consensus on the corresponding payload X has been reached. Then, as soon as the consensus on the payload X has been reached, the replicas may start, at a step 903, with the computation of the next random seed RS_{X+1}. And again, in parallel, the replicas may perform, at a step 904, a consensus protocol to agree on a payload X+1.

As according to such an embodiment the computation of the random seed RS_{X} of a batch X may or often will be finished before an agreement on the corresponding block X of the batch X has been reached, the random seed RS_{X} is not used to provide randomness for the processing of the payload X, but only for the processing of the next payload X+1.

Accordingly, during the processing of the given processing round X, randomness requests of the payload instances, e.g. of messages, of the payload X are collected. Then, in the subsequent processing round X+1, the random seed RS_{X+1} is used to provide randomness for the messages of the payload X which require randomness. Hence according to such an embodiment the messages of the payload X which do not require randomness may be processed immediately, while the messages which require randomness have to wait for responses on their randomness requests. The responses to the randomness requests of the payload instances of the given processing round X are provided in the subsequent processing round X+1 based on the random seed RS_{X+1}. And as the random seed RS_{X+1} has been computed after an agreement has been reached on the payload X, the random seed RS_{X+1} cannot be biased by the payload X.

As computing the random seed typically takes less time than reaching agreement on a payload, a batch X can be delivered and processed as soon as the corresponding payload X has been finally agreed upon. This provides advantages in terms of latency.

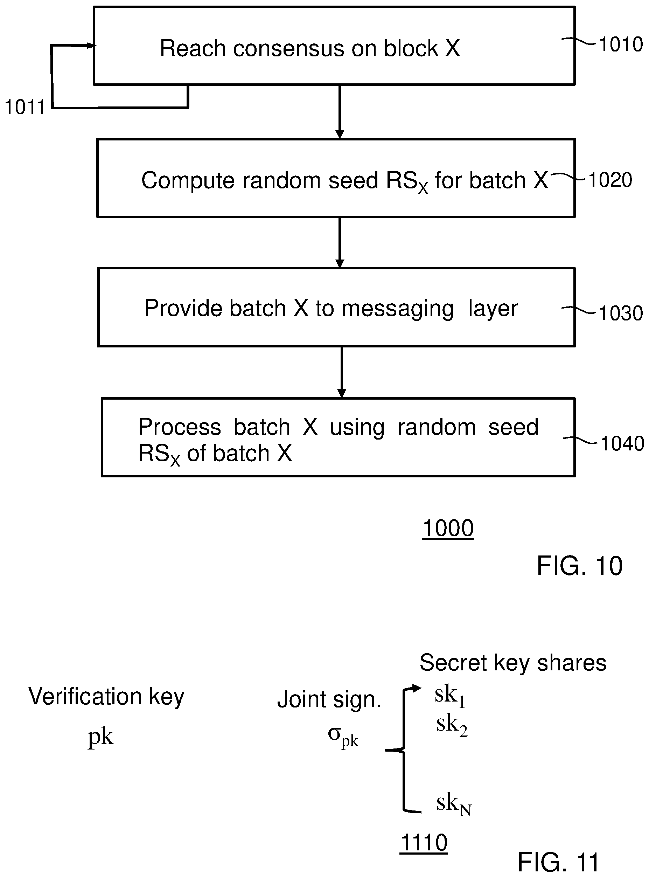

FIG. 10 shows a flow chart of methods steps of a computer-implemented method for processing a sequence of payloads by a plurality of replicas in a replicated manner.

The method performs regularly, at loops 1011, a consensus protocol to reach a consensus on input blocks comprising a payload that shall be executed by a respective replicated computing cluster, in particular by a subnetwork. The consensus protocol may be performed by a consensus subset of the nodes/replicas of the network, in particular by a consensus subset of a subnetwork. The loop 1011 comprises steps 1010 at which the nodes/replicas of the consensus subset reach a consensus on a new input block and a corresponding payload. The input blocks may be numbered with an increasing height index N**.** N may be an increasing integer, i.e. e.g. 0, 1, 2, 3 **...** N. The height index may also be denoted as block height.

As soon as the replicas have reached a consensus on an input block X and its corresponding payload X**,** the replicas start, at a step 1020, to compute a random seed RS_{X} for a batch X of a corresponding processing round X**.** Once the random seed RS_{X} has been computed, the consensus layer delivers, at a step 1030, the batch X comprising the payload X and the random seed RS_{X} to the messaging layer.

Then, at a step 1040, the replicas process batch X and process the payload X and randomness requests of the payload X with the randomness/random seed RS_{X}.

FIG. 11 shows an embodiment of keys 1110 which may be generated by a distributed threshold key generation protocol. The keys 1110 may be used by the nodes of a replicated computing cluster to perform a threshold-signature protocol and to sign a predefined input value with a threshold-signature. Such a threshold-signature may be used according to embodiments to compute the random seed. More particularly, the threshold-signature on the input value may be used as random seed.

It is assumed for this example that a number N of nodes participate in the distributed key generation protocol. Each of the N nodes have a secret key share skᵢ, wherein i = 1,..., N. The N nodes have generated jointly a common public key pk, wherein a predefined threshold, e.g. at least two thirds or a third of the nodes need to use their secret key shares to create a joint signature σₚₖ on the predefined input value. The public verification key pk can then be used to verify the joint signature. According to embodiments the threshold-signature may be executed on the respective processing round number X as predefined input value. According to other embodiments, the threshold-signature of a previous processing round may be used as input value for the threshold-signature of the next processing round.

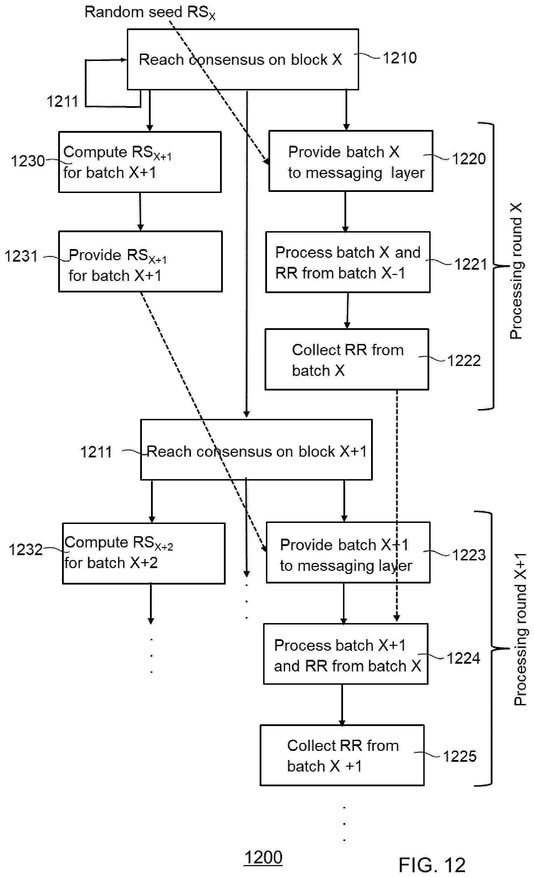

Referring now to Fig. 12, a flow chart of methods steps of a computer-implemented method for processing a sequence of payloads by a plurality of replicas in a replicated manner is shown. The method performs regularly, at loops 1211, a consensus protocol to reach a consensus on input blocks comprising a payload that shall be executed by a respective replicated computing cluster, in particular by a subnetwork. The loops 1211 comprises steps 1210 at which the nodes/replicas of the consensus subset reach a consensus on a new input block X. The input blocks may be numbered with an increasing height index X corresponding to a processing round number.

Once the consensus on an input block X has been reached, the replicated computing cluster provides, at a step 1220, a corresponding batch X comprising the payload of the input block X and a random seed RS_{X} to the messaging layer 520 of the network (see FIG. 5). The random seed RS_{X} has been computed beforehand and/or in parallel to the execution of the consensus protocol for the input block X.

At a step 1221, the replicas process the payload of batch X and randomness requests RR from the previous batch X-1. More particularly, the randomness requests RR of the payload instances, e.g. the messages, of the previous batch X-1 receive as response a randomness which is based on the random seed RS_{X} of the current batch X. The responses may be added to an induction pool of the messaging layer 520.

Furthermore, at a step 1222, the randomness requests of payload instances of the current batch X are collected. Step 1222 may be performed in parallel to step 1221.

The steps 1220, 1221 and 1222 establish a processing round X of a plurality of consecutive processing rounds.

Furthermore, as soon as a consensus on the input block X has been reached, the replicas start, at a step 1230, to compute a random seed RS_{X+1} for the batch of a subsequent processing round X+1. At a subsequent step 1231 the consensus layer 530 provides the random seed RS_{X+1} for the next batch X+1. The steps 1230 and 1231 may be performed in parallel to the processing round X.

At a step 1211, the consensus protocol reaches a consensus on the next input block X+1. This triggers on the one hand, at a step 1232, the computation of the random seed RS_{X+2} of the subsequent batch X+2. In addition, it triggers the next processing round X+1. The latter includes, at a step 1223, the providing of a batch X+1 to the messaging layer 520. The batch X+1 comprises the random seed RS_{X+1} which has been already computed at step 1230.

At a step 1224, the replicas process the payload of batch X+1 and randomness requests RR from the previous batch X. More particularly, the randomness requests RR of the payload instances of the previous batch X receive as response a randomness which is based on the random seed RS_{X+1} of the batch X+1.

Furthermore, at a step 1225, the randomness requests of payload instances of the batch X+1 are collected. These randomness requests will receive a response in the next processing round X+2.

The above described scheme may then be iterated as long as desired.

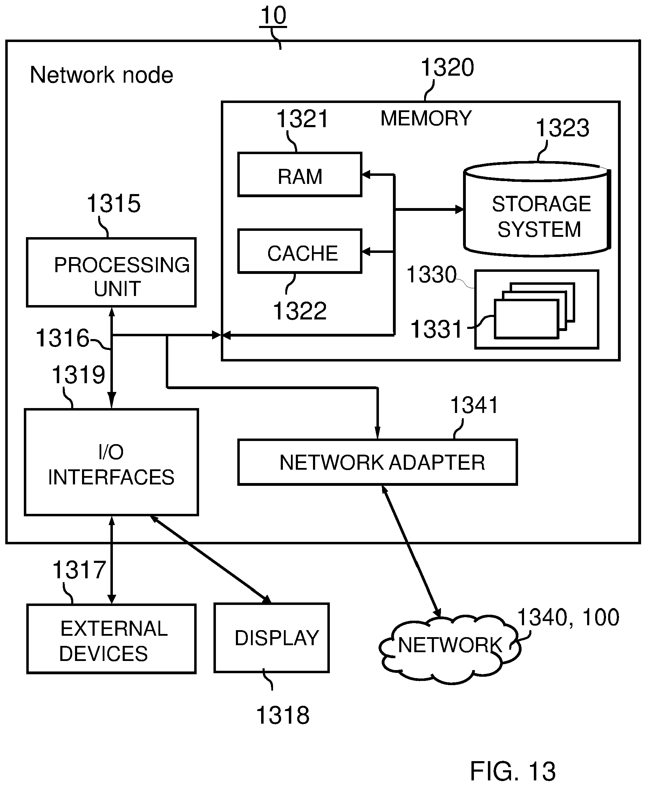

Referring now to Fig. 13, a more detailed block diagram of a network node 10 according to embodiments of the invention is shown, e.g. of the network 100 of FIG. 1. The network node 10 establishes a computing node that may perform computing functions and may hence be generally embodied as computing system or computer. The network node 10 may be e.g. a server computer. The network node 10 may be configured to perform a computer-implemented method for operating a distributed network. The network node 10 may be operational with numerous other general purpose or special purpose computing system environments or configurations.

The network node 10 may be described in the general context of computer system-executable instructions, such as program modules, being executed by a computer system. Generally, program modules may include routines, programs, objects, components, logic, data structures, and so on that perform particular tasks or implement particular abstract data types. The network node 10 is shown in the form of a general-purpose computing device. The components of network node 10 may include, but are not limited to, one or more processors or processing units 1315, a system memory 1320, and a bus 1316 that couples various system components including system memory 1320 to processor 1315.

Bus 1316 represents one or more of any of several types of bus structures, including a memory bus or memory controller, a peripheral bus, an accelerated graphics port, and a processor or local bus using any of a variety of bus architectures.

Network node 10 typically includes a variety of computer system readable media.

System memory 1320 can include computer system readable media in the form of volatile memory, such as random access memory (RAM) 1321 and/or cache memory 1322. Network node 1310 may further include other removable/non-removable, volatile/non-volatile computer system storage media. By way of example only, storage system 1323 can be provided for reading from and writing to a non-removable, non-volatile magnetic media (not shown and typically called a "hard drive"). Although not shown, a magnetic disk drive for reading from and writing to a removable, non-volatile magnetic disk (e.g.**,** a "floppy disk"), and an optical disk drive for reading from or writing to a removable, non-volatile optical disk such as a CD-ROM, DVD-ROM or other optical media can be provided. In such instances, each can be connected to bus 1316 by one or more data media interfaces. As will be further depicted and described below, memory 1320 may include at least one computer program product having a set (e.g., at least one) of program modules that are configured to carry out the functions of embodiments of the invention.

Program/utility 1330, having a set (at least one) of program modules 1331, may be stored in memory 1320 by way of example, and not limitation, as well as an operating system, one or more application programs, other program modules, and program data. Each of the operating system, one or more application programs, other program modules, and program data or some combination thereof, may include an implementation of a networking environment. Program modules 1331 generally carry out the functions and/or methodologies of embodiments of the invention as described herein. Program modules 1331 may carry out in particular one or more steps of a computer-implemented method for operating a distributed network e.g. of one or more steps of the methods as described above.

Network node 10 may also communicate with one or more external devices 1317 such as a keyboard or a pointing device as well as a display 1318. Such communication can occur via Input/Output (I/O) interfaces 1319. Still yet, network node 10 can communicate with one or more networks 40 such as a local area network (LAN), a general wide area network (WAN), and/or a public network (e.g.**,** the Internet) via network adapter 1341. According to embodiments the network 1340 may be in particular a distributed network comprising a plurality of network nodes 10, e.g. the network 100 as shown in FIG. 1**.** As depicted, network adapter 1341 communicates with the other components of network node 10 via bus 1316. It should be understood that although not shown, other hardware and/or software components could be used in conjunction with network node 10.

Aspects of the present invention may be embodied as a system, in particular a distributed network comprising a plurality of subnetworks, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g.**,** light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages.

Aspects of the present invention are described herein with reference to flowchart illustrations and/or block diagrams of methods, networks, apparatus (systems), and computer program products according to embodiments of the invention.

Computer readable program instructions according to embodiments of the invention may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of networks, systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved.

While there are shown and described presently preferred embodiments of the invention, it is to be distinctly understood that the invention is not limited thereto but may be otherwise variously embodied and practiced within the scope of the following claims.

## Claims

1. A distributed network (100), the distributed network (100) comprising a replicated computing cluster (11), the replicated computing cluster (11) comprising a plurality of nodes (10), wherein each of the plurality of nodes (10) of the replicated computing cluster (11) is configured to run a replica (18) and each of the replicas (18) is configured to run one or more computational units (15); the replicated computing cluster (11) being configured to
perform consecutive consensus rounds to reach a consensus on a sequence of payloads;
perform consecutive processing rounds comprising a consecutive processing of the sequence of payloads in a deterministic and replicated manner; wherein the distributed network is **characterized in that** the replicated computing cluster (11) is configured to
perform consecutive computations of a random seed for each of the payloads of the sequence of payloads; and
use the random seed of a respective payload of the sequence of payloads to provide randomness to the payload; wherein
the respective computation of the random seed for a respective payload is performed only after a consensus on the respective payload has been reached.

2. A distributed network (100) according to claim 1, wherein the distributed network is configured to perform the computation of the random seed by
performing a threshold-signature protocol on a predefined input value of a respective processing round, thereby creating a threshold-signature on the predefined input value; and
using the threshold-signature as random seed.

3. A distributed network (100) according to claim 2**,** wherein
the consecutive processing rounds are numbered with a consecutive processing round number; and
the predefined input value of a respective processing round is the processing round number.

4. A distributed network (100) according to claim 2, wherein the predefined input value of the threshold-signature protocol is the threshold-signature being created in the previous processing round.

5. A distributed network according to any of the preceding claims 2-4**,** wherein the threshold-signature protocol is the Boneh-Lynn-Shacham (BLS)-signature protocol.

6. A distributed network (100) according to any of the preceding claims 2 to 5**,** wherein the distributed network is configured to
perform a distributed key generation protocol for or by the plurality of nodes of the replicated computing cluster, thereby generating a verification key of a public-key threshold signature scheme and a set of corresponding secret key shares for the nodes of the replicated computing cluster; and
perform the threshold-signature protocol with the set of secret key shares.

7. A distributed network (100) according to claim 1**,** wherein the distributed network is configured to perform the computation of the random seed by
performing a coin-flipping protocol.

8. A distributed network (100) according to any of the preceding claims, wherein the distributed network is configured to perform a consecutive processing of input blocks (301-303) of a blockchain (300), wherein each of the input blocks comprises a payload of the sequence of payloads.

9. A distributed network (100) according to any of the preceding claims, wherein each of the replicas (18) is configured to process during each of the consecutive processing rounds a batch comprising the payload of the respective processing round and a random seed;
wherein the distributed network comprises in particular a consensus layer and a messaging layer, wherein the consensus layer is configured to
perform a consensus protocol for reaching consensus on the respective payloads of the sequence of payloads to be processed by the replicated computing cluster;
perform the computation of the random seeds; and
provide the payloads and the random seeds to the messaging layer; wherein
the messaging layer is configured to orchestrate a batchwise processing of the batches;
wherein the consensus layer is in particular configured to
deliver the batch of a respective processing round to the messaging layer once a consensus on the corresponding payload has been reached and once the corresponding random seed has been computed;
wherein the processing rounds comprise in particular consecutive processing round numbers X and the distributed network is configured to
start to compute a random seed RS_{X} for the batch of a processing round X after a consensus on the payload for the processing round X has been reached;
add the random seed RS_{X} to the batch of the processing round X; and
provide a response to randomness requests of the payload instances of the processing round X based on the random seed RS_{X}.

10. A distributed network (100) according to claim 9, wherein the processing rounds comprise consecutive processing round numbers X and the distributed network is configured to
start to compute a random seed RS_{X+1} for the batch of a subsequent processing round X+1 after a consensus on the payload for a given processing round X has been reached;
collect during the processing of the given processing round X randomness requests of payload instances of; and
provide responses to the randomness requests of the payload instances of the given processing round X in the subsequent processing round X+1 based on the random seed RS_{X+1};
wherein the distributed network is in particular configured to add the responses to the randomness requests to an induction pool of the messaging layer.

11. A distributed network (100) according to any of the preceding claims, wherein the distributed network is configured to derive during a respective processing round a plurality of random values from the random seed of the respective processing round; and wherein the distributed network is in particular configured to run a pseudorandom number generator, the pseudorandom number generator being configured to use the random seed of a respective processing round as input seed value.

12. A distributed network (100) according to any of the preceding claims, wherein the distributed network (100) comprises a plurality of subnetworks (11), wherein each of the plurality of subnetworks (11) comprises a set of assigned nodes (10), wherein replicas (18) of the assigned nodes of the plurality of subnetworks are configured to perform a deterministic and replicated computation across their respective subnetworks, thereby forming a plurality of replicated computing clusters.

13. A node (10) for a distributed network (100) according to any of the preceding claims, wherein the node (10) is configured to run a replica (18), wherein the replica (18) is configured to
participate in consecutive consensus rounds to reach a consensus on a sequence of payloads;
perform consecutive processing rounds comprising a consecutive processing of the sequence of payloads in a deterministic and replicated manner; wherein the node is **characterized in that** the replica is configured to
participate in consecutive computations of a random seed for each of the payloads of the sequence of payloads; and
use the random seed of a respective payload of the sequence of payloads to provide randomness to the payload; wherein
the respective computation of the random seed for a respective payload is performed only after a consensus on the respective payload has been reached.

14. A computer-implemented method for operating a distributed network (100), the distributed network (100) comprising a replicated computing cluster (11), the replicated computing cluster comprising a plurality of nodes (10), wherein each of the plurality of nodes of the replicated computing cluster is configured to run a replica (18), the method comprising
performing, by the replicated computing cluster, consecutive consensus rounds to reach a consensus on a sequence of payloads;
performing, by the replicated computing cluster, consecutive processing rounds comprising a consecutive processing of the sequence of payloads in a deterministic and replicated manner; wherein the method is **characterized by**
performing, by the replicated computing cluster (11), consecutive computations of a random seed for each of the payloads of the sequence of payloads; and
using, by the replicated computing cluster (11), the random seed of a respective payload of the sequence of payloads to provide randomness to the payload; wherein
the respective computation of the random seed for a respective payload is performed only after a consensus on the respective payload has been reached.

15. A computer program product for operating a distributed network (100), the distributed network (100) comprising a replicated computing cluster (11), the replicated computing cluster (11) comprising a plurality of nodes (10), wherein each of the plurality of nodes of the replicated computing cluster is configured to run a replica (18), the computer program product comprising a computer readable storage medium having program instructions embodied therewith, the program instructions executable by one or more of the plurality of nodes to cause the one or more of the plurality of nodes to perform a method comprising
performing consecutive consensus rounds to reach a consensus on a sequence of payloads;
performing consecutive processing rounds comprising a consecutive processing of the sequence of payloads in a deterministic and replicated manner; wherein the method is **characterized by**
performing consecutive computations of a random seed for each of the payloads of the sequence of payloads; and
using the random seed of a respective payload of the sequence of payloads to provide randomness to the payload; wherein
the respective computation of the random seed for a respective payload is performed only after a consensus on the respective payload has been reached.

## Patentansprüche

1. Ein verteiltes Netzwerk (100), wobei das verteilte Netzwerk (100) einen replizierten Rechencluster (11) umfasst, wobei der replizierte Rechencluster (11) eine Vielzahl von Knoten (10) umfasst, wobei jeder der Vielzahl von Knoten (10) des replizierten Rechenclusters (11) konfiguriert ist, um eine Replika (18) auszuführen und jede der Replikas (18) konfiguriert ist, um eine oder mehrere Recheneinheiten (15) auszuführen; wobei der replizierte Rechencluster (11) konfiguriert ist, um
aufeinanderfolgende Konsensrunden durchzuführen, um einen Konsens über eine Sequenz von Nutzdaten zu erreichen;
aufeinanderfolgende Verarbeitungsrunden durchzuführen, die eine aufeinanderfolgende Verarbeitung der Sequenz von Nutzdaten in einer deterministischen und replizierten Weise umfassen; wobei das verteilte Netzwerk **dadurch gekennzeichnet ist, dass** der replizierte Rechencluster (11) konfiguriert ist, um
aufeinanderfolgende Berechnungen eines Zufallsstartwertes für jede der Nutzdaten der Sequenz von Nutzdaten durchführen;
den Zufallsstartwert einer jeweiligen Nutzlast der Sequenz von Nutzlasten zu verwenden, um der Nutzlast Zufälligkeit zu verleihen; wobei
die jeweilige Berechnung des Zufallsstartwertes für eine jeweilige Nutzlast erst durchgeführt wird, nachdem ein Konsens über die jeweilige Nutzlast erreicht wurde.

2. Ein verteiltes Netzwerk (100) nach Anspruch 1, wobei das verteilte Netzwerk so konfiguriert ist, dass es die Berechnung des Zufallsstartwertes durchführt, indem es
ein Schwellenwertsignaturprotokoll auf einem vordefinierten Eingabewert einer jeweiligen Verarbeitungsrunde durchführt, wodurch eine Schwellenwertsignatur auf dem vordefinierten Eingabewert erzeugt wird; und
die Schwellenwertsignatur als Zufallsstartwert verwendet.

3. Ein verteiltes Netzwerk (100) nach Anspruch 2, wobei
die aufeinanderfolgenden Verarbeitungsrunden mit einer fortlaufenden Verarbeitungsrundennummer nummeriert werden; und
der vordefinierte Eingabewert einer jeweiligen Verarbeitungsrunde die Verarbeitungsrundennummer ist.

4. Ein verteiltes Netzwerk (100) nach Anspruch 2, wobei der vordefinierte Eingabewert des Schwellenwertsignaturprotokolls die Schwellenwertsignatur ist, die in der vorherigen Verarbeitungsrunde erzeugt wurde.

5. Ein verteiltes Netzwerk nach einem der vorhergehenden Ansprüche 2 bis 4, wobei das Schwellenwert-Signaturprotokoll das Boneh-Lynn-Shacham (BLS)-Signaturprotokoll ist.

6. Ein verteiltes Netzwerk (100) nach einem der vorhergehenden Ansprüche 2 bis 5, wobei das verteilte Netzwerk so konfiguriert ist, dass es
ein verteiltes Schlüsselerzeugungsprotokoll für oder durch die Vielzahl von Knoten des replizierten Rechenclusters durchführt, wodurch ein Verifizierungsschlüssel eines Public-Key-Schwellenwertsignaturschemas und ein Satz von entsprechenden geheimen Schlüsselanteilen für die Knoten des replizierten Rechenclusters erzeugt werden; und
das Schwellenwert-Signaturprotokoll mit dem Satz der geheimen Schlüsselanteile durchführt.

7. Ein verteiltes Netzwerk (100) nach Anspruch 1, wobei das verteilte Netzwerk so konfiguriert ist, dass es die Berechnung des Zufallsstartwertes mittels
Durchführen eines Münzwurfprotokolls durchführt.

8. Ein verteiltes Netzwerk (100) nach einem der vorhergehenden Ansprüche, wobei das verteilte Netzwerk so konfiguriert ist, dass es eine aufeinanderfolgende Verarbeitung von Eingabeblöcken (301-303) einer Blockchain (300) durchführt, wobei jeder der Eingabeblöcke eine Nutzlast der Sequenz von Nutzlasten umfasst.

9. Ein verteiltes Netzwerk (100) nach einem der vorhergehenden Ansprüche, wobei jede der Replikas (18) so konfiguriert ist, dass sie während jeder der aufeinanderfolgenden Verarbeitungsrunden einen Stapel verarbeitet, der die Nutzlast der jeweiligen Verarbeitungsrunde und einen Zufallsstartwert umfasst;
wobei das verteilte Netzwerk insbesondere eine Konsensschicht und eine Nachrichtenübermittlungsschicht umfasst, wobei die Konsensschicht konfiguriert ist, um
ein Konsensprotokoll durchzuführen, um einen Konsens über die jeweiligen Nutzdaten der Sequenz von Nutzdaten zu erreichen, die von dem replizierten Rechencluster verarbeitet werden sollen;
die Berechnung der Zufallsstartwerte durchzuführen; und
die Nutzdaten und die Zufallsstartwerte der Nachrichtenübermittlungsschicht bereitzustellen; wobei
die Nachrichtenübermittlungsschicht so konfiguriert ist, dass sie eine stapelweise Verarbeitung der Stapel veranlasst;
wobei die Konsensschicht insbesondere konfiguriert ist, um
den Stapel einer jeweiligen Verarbeitungsrunde an die Nachrichtenübermittlungsschicht zu übermitteln, sobald ein Konsens über die entsprechende Nutzlast erreicht und der entsprechende Zufallsstartwert berechnet wurde;
wobei die Verarbeitungsrunden insbesondere aufeinanderfolgende Verarbeitungsrundennummern X umfassen und das verteilte Netzwerk konfiguriert ist, um
mit der Berechnung eines Zufallsstartwertes RS_{X} für den Stapel einer Verarbeitungsrunde X zu beginnen, nachdem ein Konsens über die Nutzlast für die Verarbeitungsrunde X erzielt wurde;
den Zufallsstartwert RS_{X} zum Stapel der Verarbeitungsrunde X hinzuzufügen; und
eine Antwort auf Zufälligkeitsanforderungen der Nutzlastinstanzen der Verarbeitungsrunde X auf der Grundlage des Zufallsstartwertes RS_{X}. bereitzustellen.

10. Ein verteiltes Netzwerk (100) nach Anspruch 9, wobei die Verarbeitungsrunden aufeinanderfolgende Verarbeitungsrundennummern X umfassen und das verteilte Netzwerk konfiguriert ist, um
mit der Berechnung eines Zufallsstartwertes RS_{X+1} für den Stapel einer nachfolgenden Verarbeitungsrunde X+1 zu beginnen, nachdem ein Konsens über die Nutzlast für eine gegebene Verarbeitungsrunde X erreicht wurde;
während der Verarbeitung der gegebenen Verarbeitungsrunde X Zufälligkeitsanforderungen von Nutzlastinstanzen zu sammeln; und
Antworten auf die Zufälligkeitsanforderungen der Nutzlastinstanzen der gegebenen Verarbeitungsrunde X in der nachfolgenden Verarbeitungsrunde X+1 auf der Grundlage des Zufallsstartwertes RS_{X+1} zu liefern;
wobei das verteilte Netzwerk insbesondere so konfiguriert ist, dass es die Antworten auf die Zufälligkeitsanforderungen zu einem Induktionspool der Nachrichtenübermittlungsschicht hinzufügt.

11. Ein verteiltes Netzwerk (100) nach einem der vorhergehenden Ansprüche, wobei das verteilte Netzwerk so konfiguriert ist, dass es während einer jeweiligen Verarbeitungsrunde eine Vielzahl von Zufallswerten aus dem Zufallsstartwert der jeweiligen Verarbeitungsrunde ableitet; und wobei das verteilte Netzwerk insbesondere so konfiguriert ist, dass es einen Pseudozufallszahlengenerator ausführt, wobei der Pseudozufallszahlengenerator so konfiguriert ist, dass er den Zufallsstartwert einer jeweiligen Verarbeitungsrunde als Eingangsstartwert verwendet.

12. Ein verteiltes Netzwerk (100) nach einem der vorhergehenden Ansprüche, wobei das verteilte Netzwerk (100) eine Vielzahl von Teilnetzwerken (11) umfasst, wobei jedes der Vielzahl von Teilnetzwerken (11) einen Satz von zugewiesenen Knoten (10) umfasst, wobei Replikas (18) der zugewiesenen Knoten der Vielzahl von Teilnetzwerken so konfiguriert sind, dass sie eine deterministische und replizierte Berechnung über ihre jeweiligen Teilnetzwerke durchführen, wodurch eine Vielzahl von replizierten Rechenclustern gebildet wird.

13. Ein Knoten (10) für ein verteiltes Netzwerk (100) nach einem der vorhergehenden Ansprüche, wobei der Knoten (10) so konfiguriert ist, dass er eine Replika (18) ausführt, wobei die Replika (18) dazu konfiguriert ist,
an aufeinanderfolgenden Konsensrunden teilzunehmen, um einen Konsens über eine Sequenz von Nutzdaten zu erreichen;
aufeinanderfolgende Verarbeitungsrunden durchzuführen, die eine aufeinanderfolgende Verarbeitung der Sequenz von Nutzdaten in einer deterministischen und replizierten Weise umfassen; wobei der Knoten **dadurch gekennzeichnet ist, dass** die Replika konfiguriert ist, um
an aufeinanderfolgenden Berechnungen eines Zufallsstartwertes für jede der Nutzdaten der Sequenz von Nutzdaten teilzunehmen;
den Zufallsstartwert einer jeweiligen Nutzlast der Sequenz von Nutzlasten zu verwenden, um der Nutzlast Zufälligkeit zu verleihen; wobei
die jeweilige Berechnung des Zufallsstartwertes für eine jeweilige Nutzlast erst durchgeführt wird, nachdem ein Konsens über die jeweilige Nutzlast erreicht wurde.

14. Ein computerimplementiertes Verfahren zum Betreiben eines verteilten Netzwerks (100), wobei das verteilte Netzwerk (100) einen replizierten Rechencluster (11) umfasst, wobei der replizierte Rechencluster eine Vielzahl von Knoten (10) umfasst, wobei jeder der Vielzahl von Knoten des replizierten Rechenclusters konfiguriert ist, um eine Replika (18) auszuführen, wobei das Verfahren umfasst
Durchführung von aufeinanderfolgenden Konsensrunden durch den replizierten Rechencluster, um einen Konsens über eine Sequenz von Nutzdaten zu erzielen;
Durchführen von aufeinanderfolgenden Verarbeitungsrunden durch den replizierten Rechencluster, die eine aufeinanderfolgende Verarbeitung der Sequenz von Nutzdaten in einer deterministischen und replizierten Weise umfassen; wobei das Verfahren **gekennzeichnet ist durch**
Durchführen aufeinanderfolgender Berechnungen eines Zufallsstartwertes für jede der Nutzdaten der Sequenz von Nutzdaten durch den replizierten Rechencluster (11);
Verwenden des Zufallsstartwertes einer jeweiligen Nutzlast der Sequenz von Nutzlasten durch den replizierten Rechencluster (11), um der Nutzlast Zufälligkeit zu verleihen; wobei
die jeweilige Berechnung des Zufallsstartwertes für eine jeweilige Nutzlast erst durchgeführt wird, nachdem ein Konsens über die jeweilige Nutzlast erreicht wurde.

15. Ein Computerprogrammprodukt zum Betreiben eines verteilten Netzwerks (100), wobei das verteilte Netzwerk (100) einen replizierten Rechencluster (11) umfasst, wobei der replizierte Rechencluster (11) eine Vielzahl von Knoten (10) umfasst, wobei jeder der Vielzahl von Knoten des replizierten Rechenclusters konfiguriert ist, um eine Replika (18) auszuführen, wobei das Computerprogrammprodukt ein computerlesbares Speichermedium mit darin verkörperten Programmbefehlen umfasst, wobei die Programmbefehle durch einen oder mehrere der Vielzahl von Knoten ausführbar sind, um zu bewirken, dass der eine oder die mehreren der Vielzahl von Knoten ein Verfahren durchführen, das Folgendes umfasst
Durchführen aufeinanderfolgender Konsensrunden, um einen Konsens über eine Sequenz von Nutzdaten zu erreichen;
Durchführen aufeinanderfolgender Verarbeitungsrunden, die eine aufeinanderfolgende Verarbeitung der Sequenz von Nutzdaten in einer deterministischen und replizierten Weise umfassen; wobei das Verfahren **gekennzeichnet ist durch**
Durchführen aufeinanderfolgender Berechnungen eines Zufallsstartwertes für jede der Nutzdaten der Sequenz von Nutzdaten;
Verwenden des Zufallsstartwertes einer jeweiligen Nutzlast der Sequenz von Nutzlasten, um der Nutzlast Zufälligkeit zu verleihen; wobei
die jeweilige Berechnung des Zufallsstartwertes für eine jeweilige Nutzlast erst durchgeführt wird, nachdem ein Konsens über die jeweilige Nutzlast erreicht wurde.

## Revendications

1. Un réseau distribué (100), le réseau distribué (100) comprenant un cluster de calcul répliqué (11), le cluster de calcul répliqué (11) comprenant une pluralité de nœuds (10), dans lequel chacun de la pluralité de nœuds (10) du cluster de calcul répliqué (11) est configuré pour exécuter une réplique (18) et chacune des répliques (18) est configurée pour exécuter une ou plusieurs unités de calcul (15) ; le cluster de calcul répliqué (11) étant configuré pour
effectuer des tours de consensus consécutifs pour parvenir à un consensus sur une séquence de charges utiles ;
effectuer des cycles de traitement consécutifs comprenant un traitement consécutif de la séquence de charges utiles de manière déterministe et répliquée ; dans lequel le réseau distribué est **caractérisé par le fait que** le cluster de calcul répliquée (11) est configurée pour
effectuer des calculs consécutifs d'une graine aléatoire pour chacune des charges utiles de la séquence de charges utiles ; et
utiliser la graine aléatoire d'une charge utile respective de la séquence de charges utiles pour conférer un caractère aléatoire à la charge utile ; dans lequel
le calcul de la graine aléatoire pour une charge utile donnée n'est effectué qu'après l'obtention d'un consensus sur la charge utile en question.

2. Un réseau distribué (100) selon la revendication 1, dans lequel le réseau distribué est configuré pour effectuer le calcul de la graine aléatoire
en exécutant un protocole de signature de seuil sur une valeur d'entrée prédéfinie d'un cycle de traitement respectif, créant ainsi une signature de seuil sur la valeur d'entrée prédéfinie ; et
en utilisant la signature de seuil comme graine aléatoire.

3. Un réseau distribué (100) selon la revendication 2, dans lequel
les cycles de traitement consécutifs sont numérotés avec un numéro de cycle de traitement consécutif ; et
la valeur d'entrée prédéfinie d'un cycle de traitement donné est le numéro du cycle de traitement.

4. Un réseau distribué (100) selon la revendication 2, dans lequel la valeur d'entrée prédéfinie du protocole de signature de seuil est la signature de seuil créée lors du cycle de traitement précédent.

5. Un réseau distribué selon l'une des revendications précédentes 2 à 4, dans lequel le protocole de signature de seuil est le protocole de signature Boneh-Lynn-Shacham (BLS).

6. Un réseau distribué (100) selon l'une des revendications précédentes 2 à 5, dans lequel le réseau distribué est configuré pour
exécuter un protocole de génération de clés distribuées pour ou par la pluralité de nœuds du cluster de calcul répliquée, générant ainsi une clé de vérification d'un système de signature de seuil à clé publique et un ensemble de parts de clés secrètes correspondantes pour les nœuds du cluster de calcul répliquée ; et
exécuter le protocole de signature de seuil avec l'ensemble des parts de clés secrètes.

7. Un réseau distribué (100) selon la revendication 1, dans lequel le réseau distribué est configuré pour effectuer le calcul de la graine aléatoire en
réalisant un protocole de pile ou face.

8. Un réseau distribué (100) selon l'une des revendications précédentes, dans lequel le réseau distribué est configuré pour effectuer un traitement consécutif des blocs d'entrée (301-303) d'une blockchain (300), dans lequel chacun des blocs d'entrée comprend une charge utile de la séquence de charges utiles.

9. Un réseau distribué (100) selon l'une des revendications précédentes, dans lequel chacune des répliques (18) est configurée pour traiter, au cours de chacun des cycles de traitement consécutifs, un lot comprenant la charge utile du cycle de traitement respectif et une graine aléatoire ;
dans lequel le réseau distribué comprend en particulier une couche de consensus et une couche de messagerie, la couche de consensus étant configurée pour
exécuter un protocole de consensus pour parvenir à un consensus sur les charges utiles respectives de la séquence de charges utiles à traiter par le cluster de calcul répliqué ;
effectuer le calcul des graines aléatoires ; et
fournir les charges utiles et les graines aléatoires à la couche de messagerie ; dans lequel
la couche de messagerie est configurée pour orchestrer un traitement des lots par lots;
dans lequel la couche de consensus est notamment configurée pour
remettre le lot d'un cycle de traitement respectif à la couche de messagerie une fois qu'un consensus sur la charge utile correspondante a été atteint et que la graine aléatoire correspondante a été calculée ;
dans lequel les cycles de traitement comprennent en particulier des numéros de cycle de traitement consécutifs X et le réseau distribué est configuré pour
commencer à calculer une graine aléatoire RS_{X} pour le lot d'un cycle de traitement X après qu'un consensus sur la charge utile pour le cycle de traitement X a été atteint ;
ajouter la graine aléatoire RS_{X} au lot du cycle de traitement X ; et
fournir une réponse aux demandes d'aléa des instances de charge utile du cycle de traitement X sur la base de la graine aléatoire RS_{X}.

10. Un réseau distribué (100) selon la revendication 9, dans lequel les cycles de traitement comprennent des numéros de cycle de traitement consécutifs X et le réseau distribué est configuré pour
commencer à calculer une graine aléatoire RS_{X+1} pour le lot d'un cycle de traitement ultérieur X+1 après qu'un consensus sur la charge utile pour un cycle de traitement X donné a été atteint ;
recueillir, au cours du cycle de traitement donné, X demandes de données aléatoires concernant des instances de données utiles ; et
fournir des réponses aux demandes d'aléa des instances de charge utile du cycle de traitement X donné dans le cycle de traitement suivant X+1 sur la base de la graine aléatoire RS_{X+1};
le réseau distribué étant notamment configuré pour ajouter les réponses aux demandes d'aléa à un pool d'induction de la couche de messagerie.

11. Un réseau distribué (100) selon l'une des revendications précédentes, dans lequel le réseau distribué est configuré pour dériver, au cours d'un cycle de traitement respectif, une pluralité de valeurs aléatoires à partir de la graine aléatoire du cycle de traitement respectif ; et dans lequel le réseau distribué est en particulier configuré pour exécuter un générateur de nombres pseudo-aléatoires, le générateur de nombres pseudo-aléatoires étant configuré pour utiliser la graine aléatoire d'un cycle de traitement respectif comme valeur d'entrée de la graine.

12. Un réseau distribué (100) selon l'une des revendications précédentes, dans lequel le réseau distribué (100) comprend une pluralité de sous-réseaux (11), dans lequel chacun de la pluralité de sous-réseaux (11) comprend un ensemble de nœuds assignés (10), dans lequel des répliques (18) des nœuds assignés de la pluralité de sous-réseaux sont configurées pour effectuer un calcul déterministe et répliqué dans leurs sous-réseaux respectifs, formant ainsi une pluralité de clusters de calcul répliquées.

13. Un nœud (10) pour un réseau distribué (100) selon l'une des revendications précédentes, dans lequel le nœud (10) est configuré pour exécuter une réplique (18), dans lequel la réplique (18) est configurée pour
participer à des cycles de consensus consécutifs pour parvenir à un consensus sur une séquence de charges utiles ;
effectuer des cycles de traitement consécutifs comprenant un traitement consécutif de la séquence de charges utiles de manière déterministe et répliquée ; dans lequel le nœud est **caractérisé par le fait que** la réplique est configurée pour
participer aux calculs consécutifs d'une graine aléatoire pour chacune des charges utiles de la séquence de charges utiles ; et
utiliser la graine aléatoire d'une charge utile respective de la séquence de charges utiles pour conférer un caractère aléatoire à la charge utile ; dans lequel
le calcul de la graine aléatoire pour une charge utile donnée n'est effectué qu'après l'obtention d'un consensus sur la charge utile en question.

14. Un procédé mis en œuvre par ordinateur pour exploiter un réseau distribué (100), le réseau distribué (100) comprenant un cluster de calcul répliqué (11), le cluster de calcul répliqué comprenant une pluralité de nœuds (10), dans lequel chacun de la pluralité de nœuds du cluster de calcul répliqué est configuré pour exécuter une réplique (18), le procédé comprenant
effectuer, par le cluster de calcul répliqué, de cycles de consensus consécutifs pour parvenir à un consensus sur une séquence de charges utiles ;
effectuer, par le cluster de calcul répliqué, de cycles de traitement consécutifs comprenant un traitement consécutif de la séquence de charges utiles d'une manière déterministe et répliquée ; dans lequel le procédé est **caractérisé en ce qu'**il
exécute, par le cluster de calcul répliqué (11), des calculs consécutifs d'une graine aléatoire pour chacune des charges utiles de la séquence de charges utiles ; et
utilise, par le cluster de calcul répliqué (11), la graine aléatoire d'une charge utile de la séquence de charges utiles pour conférer un caractère aléatoire à la charge utile ; dans lequel
le calcul de la graine aléatoire pour une charge utile donnée n'est effectué qu'après l'obtention d'un consensus sur la charge utile respective.

15. Un produit de logiciel d'ordinateur pour l'exploitation d'un réseau distribué (100), le réseau distribué (100) comprenant un cluster de calcul répliqué (11), le cluster de calcul répliqué (11) comprenant une pluralité de nœuds (10), dans lequel chacun de la pluralité de nœuds du cluster de calcul répliqué est configuré pour exécuter une réplique (18), le produit de logiciel d'ordinateur comprenant un support de stockage lisible par ordinateur ayant des instructions de logiciel incorporées, les instructions de logiciel exécutables par un ou plusieurs nœuds de la pluralité de nœuds pour amener un ou plusieurs nœuds de la pluralité de nœuds à exécuter une méthode comprenant
effectuer des cycles de consensus consécutifs pour parvenir à un consensus sur une séquence de charges utiles ;
effectuer des cycles de traitement consécutifs comprenant un traitement consécutif de la séquence de charges utiles d'une manière déterministe et répliquée ; dans lequel le procédé est **caractérisé par**
effectuer des calculs consécutifs d'une graine aléatoire pour chacune des charges utiles de la séquence de charges utiles ; et
utiliser la graine aléatoire d'une charge utile respective de la séquence de charges utiles pour conférer un caractère aléatoire à la charge utile ; dans lequel
le calcul de la graine aléatoire pour une charge utile donnée n'est effectué qu'après l'obtention d'un consensus sur la charge utile en question.
